# EUROPÄISCHE PATENTSCHRIFT

(11) **EP 1 397 275 B1**
(45) Veröffentlichungstag und Bekanntmachung des Hinweises auf die Patenterteilung: **06.09.2006**
(21) Anmeldenummer: 02745104.6
(22) Anmeldetag: 31.05.2002
(51) Int. Cl.: B60R 21/01

(54) **VORRICHTUNG ZUR KLASSIFIZIERUNG DER SITZBELEGUNG IN EINEM KRAFTFAHRZEUG**
DEVICE FOR CLASSIFICATION OF SEAT OCCUPANCY IN A MOTOR VEHICLE
DISPOSITIF DE CLASSIFICATION D'OCCUPATION DE SIEGE DANS UN VEHICULE AUTOMOBILE

(30) Priorität: 02.06.2001 DE 10127058
(43) Veröffentlichungstag der Anmeldung: 17.03.2004
(73) Patentinhaber: ROBERT BOSCH GMBH, 70442 Stuttgart (DE)
(72) Erfinder: MARCHTHALER, Reiner, 73333 Gingen (DE); LICH, Thomas, 71409 Schwaikheim (DE); MACK, Frank, 70376 Stuttgart (DE); MEYER, Michael, 71155 Altdorf (DE)
(86) Internationale Anmeldenummer: PCT/DE2002/002000
(87) Internationale Veröffentlichungsnummer: WO 2002/098709

(56) Entgegenhaltungen:
- DE-A- 10 049 528
- US-A- 5 394 955

## Beschreibung

### Stand der Technik

Die Erfindung betrifft eine Vorrichtung zur Klassifizierung der Sitzbelegung in einem Kraftfahrzeug, dessen Sitze jeweils mit einem Sicherheitsgurt, einem Gurtschloss für den Sicherheitsgurt und einem Gurtschlossschalter ausgestattet sind. Die Vorrichtung umfasst mindestens einen Gurtkraftsensör für mindestens einen Sicherheitsgurt des Kraftfahrzeugs.

Das Auslösen von Rückhaltemitteln in einem Kraftfahrzeug erfolgt in der Regel in Abhängigkeit von verschiedenen Parametern, wie z.B. der Schwere des Aufpralls sowie der Position und des Gewichts der Insassen. In diesem Zusammenhang ist es sinnvoll, auch die jeweilige Gurtkraft zu berücksichtigen, was nachfolgend anhand eines Beispiels näher erläutert wird.

Es ist bekannt, zum Zünden eines mehrstufigen Airbags und zum Auslösen von Gurtstraffern Informationen über das Profil der einzelnen Insassen zu erfassen, die Rückschlüsse auf deren Gewicht zulassen. In der Praxis werden dazu beispielsweise Insassenklassifizierungssysteme mit einer im Sitz verbauten Kraftsensoranordnung eingesetzt. Bei den Kraftsensoren kann es sich um Dehnmessstreifen zur direkten Gewichtsmessung handeln. Die Kraftsensoranordnung kann aber auch in Form einer Sensormatte mit druckempfindlichen Sensorzellen realisiert sein, die in einer Matrix angeordnet sind und einzeln angesteuert werden können, so dass sich die Druckverteilung im Sitz in Form einer Wertematrix erfassen lässt. Je schwerer eine Person ist, um so stärker wird das Sitzmaterial eingedrückt und um so größer ist die Anzahl der aktivierten Sensorzellen. Außerdem ist der von einer Sensorzelle erfasste Druckwert per se natürlich abhängig von der jeweiligen Druckbeaufschlagung. Bei der Auswertung der von den einzelnen Sensorzellen der Sensormatte erfassten Druckdaten wird neben den einzelnen Druckwerten also auch die Anzahl der aktivierten Sensorzellen berücksichtigt. Die Auswertung erfolgt durch ein ebenfalls im Sitz verbautes Steuergerät. Das Ergebnis der Auswertung wird dem Airbagsteuergerät übermittelt, so dass die individuelle Sitzbelegung beim Auslösen der Rückhaltemittel berücksichtigt werden kann. Dieses Verfahren ist weitgehend unabhängig von äußeren Bedingungen, wie Kälte oder Verschleiß.

Die bekannten Insassenklassifizierungssysteme stoßen bei der Erkennung von Kindersitzen, insbesondere von angeschnallten Kindersitzen, regelmäßig an ihre Grenzen, wenn die anliegende Gurtkraft nicht berücksichtigt wird.

So lässt sich ein Kindersitz zwar in der Regel anhand seines nicht menschenähnlichen Sitzprofils erkennen. Wird ein Kindersitz aber sehr fest angeschnallt, mit einer Gurtkraft von beispielsweise 150 N, so wird er entsprechend stark in den Sitz gedrückt. Dabei wird das Sitzprofil des Kindersitzes verfälscht; der Kindersitz erscheint schwerer, als er tatsächlich ist. Durch das. Aufbringen einer entsprechenden Gurtkraft kann das Auswerteergebnis eines Insassenklassifizierungssystems also derart verfälscht werden, dass ein Kindersitz als "Erwachsener" klassifiziert wird, so dass der Beifahrerairbag fälschlicherweise freigeschaltet wird.

Allerdings kann eine Gurtkraft von über 30 N nicht auf Dauer beim Anschnallen von Personen angelegt werden, da der Gurt in diesem Fall in der Regel nachgibt. Eine derart hohe Gurtkraft wäre zudem so unbequem für den Insassen, dass sie nicht dauerhaft beibehalten würde. Es kann daher mit ziemlicher Sicherheit davon ausgegangen werden; dass keine Person sondern ein Kindersitz oder ein anderer Gegenstand angeschnallt ist, wenn die Gurtkraft einen bestimmten Schwellwert übersteigt. Mit Hilfe der Information der anliegenden Gurtkraft kann also zumindest in gewissem Umfang bereits eine Belegungserkennung vorgenommen werden. Deshalb umfassen bekannte Insassenklassifizierungssysteme neben einer Kraftsensoranordnung häufig auch einen Gurtkraftsensor.

Aus der gattungsbildenden DE 100 49 528 A1 ist eine Fahrgastzurückhaltende Schutzeinrichtung bekannt. Hier wird ein Spannungsschalter als Gurtkraftsensor verwendet, wobei über eine Brückenschaltung, die einen Verformungsmesser oder einen Dehnungsmesser umfasst, ein Gurtspannungswert erzeugt wird. Darüber hinaus ist ein Gurtschlossschalter vorgesehen, sodass mit anderen Sensorwerten eine Verknüpfung dieser Signale geschieht und diese Verknüpfungssignale dem Airbagauslösegerät zugeführt werden.

Aus US-5,394,955 A ist eine Vorrichtung zur Anregung der Verwendung eines Gurte bekannt. Dabei ist eine Parallelschaltung von zwei Schaltern vorgesehen.

### Vorteile der Erfindung

Mit der vorliegenden Erfindung wird eine Vorrichtung der eingangs genannten Art zur Insassenklassifizierung in einem Kraftfahrzeug vorgeschlagen, mit der sich die Genauigkeit bei der Erkennung von Kindersitzen erhöhen lässt, wobei bereits vorhandene Signalleitungen für das Ausgangssignal des Gurtkraftsensors genutzt werden können.

Dies wird erfindungsgemäß durch die Merkmale des Anspruchs 1 erreicht.

Der Gurtschlossschalter dient zum Erfassen des Gurtanlegezustands, d.h. zum Erkennen, ob ein Fahrzeuginsasse angeschnallt ist oder nicht. Dementsprechend kann sich der Gurtschlossschalter nur in zwei unterschiedlichen Zuständen befinden, und das Ausgangssignal des Gurtschlossschalters kann nur zwei unterschiedliche Werte annehmen. Das Ausgangssignal des Gurtschlossschalters wird dem Airbagsteuergerät zugeführt, damit der Gurtanlegezustand beim Auslösen der Rückhaltemittel berücksichtigt werden kann. Auch das Ausgangssignal des Gurtkraftsensors wird dem Airbagsteuergerät zugeführt, wenn es beispielsweise im Rahmen der Insassenklassifizierung beim Auslösen der Rückhaltemittel berücksichtigt werden soll. Erfindungsgemäß ist nun erkannt worden, dass sich die Ausgangssignale des Gurtkraftsensors und des Gurtschlossschalters in vorteilhafter Weise zusammenfassen lassen, ohne dass ein wesentlicher Informationsverlust eintritt. Zum einen werden beide Ausgangssignale dem Airbagsteuergerät zugeführt. Zum anderen sind die beiden Ausgangssignale insoweit miteinander gekoppelt, als der Gurtkraftsensor nur dann sinnvolle Ausgangssignale liefern kann, wenn der entsprechende Sicherheitsgurt gesteckt ist, d.h. wenn sich der Gurtschlossschalter in dem entsprechenden Zustand befindet. Für die Ausgangssignale des Gurtkraftsensors und des Gurtschlossschalters können dieselben Signalleitungen zum Airbagsteuergerät und ggf. auch dieselbe Auswerteschaltung verwendet werden.

Grundsätzlich gibt es verschiedene Möglichkeiten für die Realisierung der erfindungsgemäßen Vorrichtung, solange das Gurtschloss-Ausgangssignal eindeutige Rückschlüsse auf das Ausgangssignal des Gurtkraftsensors zulässt.

In einer besonders vorteilhaften Variante der erfindungsgemäßen Vorrichtung ist das Ausgangssignal des Gurtschlossschalters widerstandscodiert, da sich so auch Kurzschlüsse und Unterbrechungen sicher erkennen lassen. Dementsprechend ist hier auch das Ausgangssignal des Gurtkraftsensors widerstandscodiert.

Bei der Insassenklassifizierung erfolgt die Auswertung der erfassten Gurtkraft in der Regel in Form einer Schwellwertbetrachtung. Liegt die erfasste Gurtkraft oberhalb eines Schwellwerts von beispielsweise 30 N, kann davon ausgegangen werden, dass der entsprechende Fahrzeugsitz durch einen Kindersitz oder einen anderen Gegenstand belegt ist. In der Praxis erweist sich die Verwendung von mehreren Schwellwerten als vorteilhaft, die einen sogenannten Graubereich für die erfasste Gurtkraft definieren. In diesen Fällen kann - allein aufgrund der Gurtkraft - nicht eindeutig entschieden werden, ob der Fahrzeugsitz von einer Person oder einem Kindersitz belegt ist. Für die Entscheidung müssen dann weitere Parameter herangezogen werden, was die Insassenklassifizierung insgesamt verbessert. Im Hinblick den Einsatz des Gurtkraftsensors im Rahmen der Insassenklassifizierung erweist es sich deshalb als vorteilhaft, wenn das Ausgangssignal des Gurtkraftsensors nur bestimmte Widerstandswerte annehmen kann, je nach dem ob die Gurtkraft oberhalb oder unterhalb mindestens eines Schwellwerts liegt, so dass das Gurtschloss-Ausgangssignal auch nur bestimmte Widerstandswerte annehmen kann, je nach dem ob das Gurtschloss offen oder geschlossen ist. Die Schwellwertbetrachtung findet in diesem Fall schon im Gurtkraftsensor statt.

Die Ausgangssignale des Gurtkraftsensors und des Gurtschlossschalters sind schaltungstechnisch einfach zusammengefasst, indem der Gurtkraftsensor und der Gurtschlossschalter parallel geschaltet werden. In diesem Zusammenhang erweist es sich als besonders vorteilhaft, wenn der Gurtkraftsensor und der Gurtschlossschalter in das Gurtschloss integriert sind.

### Zeichnung

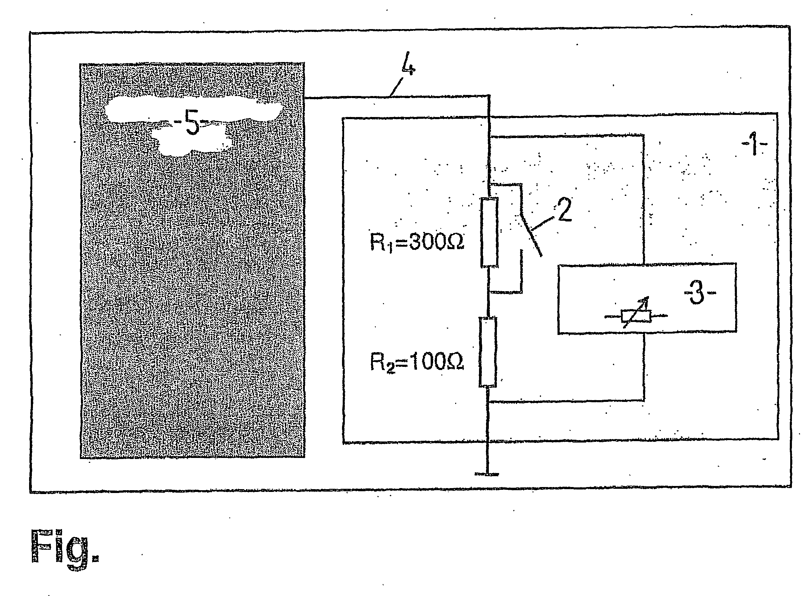

Wie bereits voranstehend ausführlich erörtert, gibt es verschiedene Möglichkeiten, die Lehre der vorliegenden Erfindung in vorteilhafter Weise auszugestalten und weiterzubilden. Dazu wird einerseits auf die dem Patentanspruch 1 nachgeordneten Patentansprüche und andererseits auf die nachfolgende Beschreibung eines Ausführungsbeispiels der Erfindung anhand der Zeichnung verwiesen.

Die einzige Figur zeigt eine Möglichkeit der Verschaltung eines Gurtkraftsensors mit einem Gurtschlossschalter im Rahmen einer erfindungsgemäßen Vorrichtung zur Klassifizierung der Sitzbelegung in einem Kraftfahrzeug.

### Beschreibung des Ausführungsbeispiels

Die in der einzigen Figur zumindest teilweise dargestellte Vorrichtung zur Klassifizierung der Sitzbelegung in einem Kraftfahrzeug ist für ein Kraftfahrzeug konzipiert, dessen Sitze jeweils mit einem Sicherheitsgurt, einem Gurtschloss 1 für den Sicherheitsgurt und einem Gurtschlossschalter 2 ausgestattet sind. Die Vorrichtung umfasst mindestens einen Gurtkraftsensor 3 pro Sicherheitsgurt. Je nach Fahrzeugausstattung können aber auch nur für die Sicherheitsgurte des Fahrersitzes und des Beifahrersitzes Gurtkraftsensoren vorgesehen sein.

Erfindungsgemäß sind der Gurtkraftsensor 3 und der dem entsprechenden Sicherheitsgurt zugeordnete Gurtschlossschalter 2 so miteinander verschaltet, dass die Ausgangssignale des Gurtkraftsensors 3 und des Gurtschlossschalters 2 zu einem Gurtschloss-Ausgangssignal zusammengefasst sind, das im hier dargestellten Ausführungsbeispiel über eine Signalleitung 4 einem Airbagauslösegerät 5 zugeführt wird.

Der Gurtkraftsensor 3 und der Gurtschlossschalter 2 sind hier in das Gurtschloss 1 integriert, was sich im Hinblick auf eine kompakte Bauweise als vorteilhaft erweist.

Gurtschlossschalter dienen zum Erfassen des Gurtanlegezüstands eines Insassen und sind in der Praxis häufig widerstandscodiert ausgeführt, um auch Kurzschlüsse und Leitungsunterbrechungen sicher zu erkennen. Der Gurtschlossschalter 2 im hier dargestellten Ausführungsbeispiel ist ebenfalls widerstandscodiert. Dazu umfasst das Gurtschloss 1 zwei in Reihe geschaltete Widerstände: R₁ = 300Ω und R₂ = 100Ω. Der Gurtschlossschalter 2 ist parallel zu R₁ geschaltet, so dass der Widerstand R₁ bei geschlossenem Gurtschlossschalter 2, also bei gestecktem Sicherheitsgurt, überbrückt wird. Um die Ausgangssignale des Gurtkraftsensors 3 und des Gurtschlossschalters 2 zusammenfassen zu können, ist auch das Ausgangssignal des Gurtkraftsensors 3 widerstandscodiert.

Der Gurtkraftsensor 3 ist parallel zu der Reihenschaltung der Widerstände R₁ und R₂ und damit auch parallel zum Gurtschlossschalter 2 geschaltet.

Der Gurtkraftsensor 3 kann im hier dargestellten Ausführungsbeispiel nur zwei unterschiedliche Widerstandswerte annehmen, nämlich entweder ∞, wenn die Gurtkraft unterhalb eines vorgegebenen Schwellwerts liegt, oder 100Ω, wenn die Gurtkraft oberhalb dieses Schwellwerts liegt. Dementsprechend kann hier also auch das Gurtschloss-Ausgangssignal nur bestimmte Widerstandswerte annehmen, je nach dem ob das Gurtschloss 1 offen oder geschlossen ist.

Für das Gurtschloss-Ausgangssignal GS-AS der in der einzigen Figur dargestellten Variante einer erfindungsgemäßen Vorrichtung ergibt sich die nachfolgende Entscheidungstabelle:

| GS-AS | |
|---|---|
| < 50Ω | : Fehler |
| 50Ω | : Sicherheitsgurt gesteckt und Gurtkraft > Schwellwert |
| 50Ω < ... > 100Ω | : Fehler |
| 100Ω | : Sicherheitsgurt gesteckt und Gurtkraft < Schwellwert |
| 100Ω <...> 400Ω | : Fehler |
| 400Ω | : Sicherheitsgurt nicht gesteckt |
| > 400Ω | : Fehler |

## Patentansprüche

1. Vorrichtung zur Klassifizierung der Sitzbelegung in einem Kraftfahrzeug, dessen Sitze jeweils mit einem Sicherheitsgurt und einem Gurtschloss (1) für den Sicherheitsgurt ausgestattet sind, wobei die Vorrichtung mindestens einen Gurtkraftsensor (3) und einem Gurthschlossschalter (2) für den mindestens einen Sicherheitsgurt umfasst, **dadurch gekennzeichnet, dass** der Gurtkraftsensor (3) und der dem entsprechenden Sicherheitsgurt zugeordnete Gurtschlossschalter (2) so miteinander verschaltet sind, dass die Ausgangssignale des Gurtkraftsensors (3) und des Gurtschlossschalters (2) zu einem Gurtschloss-Ausgangssignal zusammengefasst sind, dass die Ausgangssignale jeweils nur zwei Werte annehmen können und das Gurtschloss-Ausgangssignal über eine Signalleitung (4) zu einem Airbagauslöegerät übertragen wird, dass der Gurtkraftsensor (3) und der Gurtschlossschalter (2) parallel geschaltet sind.

2. Vorrichtung nach Anspruch 2, **dadurch gekennzeichnet, dass** die Ausgangssignale des Gurtkraftsensors (3) und des Gurtschlossschalters (2) jeweils widerstandscodiert sind.

3. Vorrichtung nach Anspruch 2, **dadurch gekennzeichnet, dass** das Ausgangssignal des Gurtkraftsensors (3) nur bestimmte Widerstandswerte annehmen kann, je nach dem, ob die Gurtkraft oberhalb oder unterhalb mindesten eines Schwellwerts liegt, so dass das Gurtschloss-Augsangssignal auch nur bestimmte Widerstandswerte annehmen kann, je nach dem, ob das Gurtschloss (1) offen oder geschlossen ist.

4. Vorrichtung nach einem der Ansprüche 1 bis 4, **dadurch gekennzeichnet, dass** der Gurtkraftsensor (3) und der Gurtschlossschalter (2) in das Gurtschloss (1) integriert sind.

## Claims

1. Device for classifying the seat occupancy in a motor vehicle whose seats are equipped with a seat belt and a belt lock (1) for the seat belt, the device comprising at least one belt force sensor (3) and a belt lock switch (2) for the at least one seat belt, **characterized in that** the belt force sensor (3) and the belt lock switch (2) which is assigned to the corresponding seat belt are connected to one another in such a way that the output signals of the belt force sensor (3) and of the belt lock switch (2) are combined to form a belt lock output signal, and **in that** the output signals can each assume only two values and the belt lock output signal is transmitted to an airbag triggering device via a signal line (4), **in that** the belt force sensor (3) and the belt lock switch (2) are connected in parallel.

2. Device according to Claim 2, **characterized in that** the output signals of the belt force sensor (3) and of the belt lock switch (2) are each resistance coded.

3. Device according to claim 2, **characterized in that** the output signal of the belt force sensor (3) can assume only specific resistance values depending on whether the belt force is above or below at least one threshold value so that the belt lock output signal can also only assume specific resistance values depending on whether the belt lock (1) is open or closed.

4. Device according to one of Claims 1 to 4, **characterized in that** the belt force sensor (3) and the belt lock switch (2) are integrated into the belt lock (1).

## Revendications

1. Dispositif de classification d'occupation de siège dans un véhicule automobile dont les sièges sont respectivement équipés d'une ceinture de sécurité et d'une boucle (1) destinée à la ceinture de sécurité, le dispositif comprenant au moins un capteur de force de ceinture (3) et un contacteur de boucle de ceinture (2) destinés à la ceinture de sécurité,
**caractérisé en ce que**
le capteur de force de ceinture (3) et le contacteur de boucle de ceinture (2) associé à sa ceinture de sécurité sont connectés l'un à l'autre de telle manière que les signaux de sortie du capteur de force de ceinture (3) et du contacteur de boucle de ceinture (2) sont regroupés en un signal de sortie de la boucle de ceinture, les signaux de sortie ne peuvent accepter que deux valeurs et le signal de sortie de la boucle de ceinture est transmis par un conducteur de signaux (4) à un appareil de déclenchement de coussin gonflable, le capteur de force de ceinture (3) et le contacteur de boucle de ceinture (2) étant connectés en parallèle.

2. Dispositif selon la revendication 1,
**caractérisé en ce que**
les signaux de sortie du capteur de force de ceinture (3) et du contacteur de boucle de ceinture (2) ont respectivement un code de résistance.

3. Dispositif selon la revendication 2,
**caractérisé en ce que**
le signal de sortie du capteur de force de ceinture (3) ne peut accepter que certaines valeurs de résistance en fonction de ce que la force de la ceinture est supérieure ou inférieure à au moins une valeur seuil, de telle sorte que le signal de sortie de la boucle de ceinture ne peut lui aussi accepter que certaines valeurs de résistance en fonction de ce que la boucle de ceinture (1) est ouverte ou fermée.

4. Dispositif selon l'une des revendications 1 à 3,
**caractérisé en ce que**
le capteur de force de ceinture (3) et le contacteur de boucle de ceinture (2) sont intégrés dans la boucle de ceinture (1).
